# EUROPÄISCHE PATENTANMELDUNG

(11) **EP 3 825 166 A1**
(43) Veröffentlichungstag der Anmeldung: **26.05.2021**
(21) Anmeldenummer: 20200463.6
(22) Anmeldetag: 07.10.2020
(51) Int. Cl.: B60M 1/14

(54) **OBERLEITUNGSANLAGE MIT ISOLIERTEN KREUZENDEN FAHRDRÄHTEN**

(30) Priorität: 20.11.2019 DE 102019217902
(71) Anmelder: Siemens Mobility GmbH, 81739 München (DE)
(72) Erfinder: Dölling, Andre, 91056 Erlangen (DE); Rister, Stephan, 90469 Nürnberg (DE); Schmieder, Axel, 04288 Leipzig (DE)

(57) **Zusammenfassung**

Die Erfindung betrifft eine Oberleitungsanlage mit isolierten kreuzenden Fahrdrähten.

Bei der erfindungsgemäßen Oberleitungsanlage ist zur Vermeidung von Lichtbögen insbesondere in Kreuzungsbereichen, z. B. auf Schienenstrecken im Bereich von Weichen, eine elektrische Isolierung zwischen einem Kreuzungsstab und den zwei stromführenden, sich kreuzenden Fahrdrähten vorgesehen. Für die elektrische Isolierung sind Isolierelemente beispielsweise aus Keramik oder Kunststoff vorgesehen, die auf entsprechend vorhandene Befestigungsrillen u.a. aufgeclipst werden können und somit sehr leicht nachrüstbar bzw. austauschbar sind. Der Verschleiß solcher Fahrdrahtkreuzungen wird hiermit deutlich verringert, wodurch sich deren Lebensdauer wesentlich verlängert.

## Beschreibung

Die Erfindung betrifft eine Oberleitungsanlage mit isolierten kreuzenden Fahrdrähten.

Oberleitungsanlagen stellen die kontinuierliche Versorgung eines elektrischen Triebfahrzeug eines Fahrzeugs, insbesondere Schienenfahrzeugs, mit elektrischer Energie sicher. Dazu müssen auch Kreuzungsbereiche, z. B. im Bereich von Weichen, mit Oberleitungsanlagen so überspannt sein, dass ein Stromabnehmer eines Fahrzeugs, insbesondere Schienenfahrzeugs, zuverlässig unterhalb der Fahrdrähte geführt wird und zusätzlich eine permanente bidirektionale Stromübertragung sowohl zum als auch vom Fahrzeug existiert.

Dazu gibt es grundsätzlich die zwei Möglichkeiten einer kreuzenden oder einer tangentialen Bespannung.

Aus Gründen der Einfachheit und Flexibilität wurde und wird insbesondere im Bereich von Weichen im Schienenverkehr häufig eine kreuzende Weichenbespannung, meist unabhängig von der Bauart der Oberleitungsanlage, dem Querschnitt bzw. dem Leitermaterial des Fahrdrahtes, verwendet, bei der sich die entsprechenden, stromführenden Fahrdrähte kreuzen. In diesem Bereich wird üblicherweise ein starrer Kreuzungsstab verwendet, der mittels jeweils einer Befestigungsklemme an den Enden des Kreuzungsstabs mit einem der Fahrdrähte fest verbunden ist, wodurch eine Lücke zwischen Kreuzungsstab und verbundenem (Haupt-) Fahrdraht entsteht, durch die der zweite (Kreuzungs) Fahrdraht verläuft und dabei oberhalb des anderen (Haupt-) Fahrdrahts diesen kreuzt.

Im Bereich der sich kreuzenden Fahrdrähte kommt es bei der Durchfahrt von Schienenfahrzeugen mit vergleichsweise hohen Befahrgeschwindigkeiten infolge von entstehenden Schwingungen teilweise zu größeren Bewegungen der zwei Fahrdrähte gegeneinander, die u.U. eine, wenn auch nur kurzfristige Stromunterbrechung nach sich ziehen, wodurch sich elektrische Abrisslichtbögen ausbilden können, da die Fahrdrähte üblicherweise als blanke Leiter ausgeführt sind.

Dies zieht einen sehr starken Verschleiß an den Fahrdrähten durch Reduzierung des Querschnitts der Drähte und somit auch der Lebensdauer der Anlage nach sich.

Der Erfindung liegt die Aufgabe zugrunde, eine Oberleitungsanlage anzugeben, bei der der Verschleiß an sich kreuzenden Fahrdrähten reduziert wird.

Gelöst wird die Aufgabe durch die Merkmale des unabhängigen Patentanspruchs 1. Weiterbildungen und Ausgestaltungen der Erfindung finden sich in den Merkmalen der abhängigen Patentansprüche wieder.

Dazu wird eine Oberleitungsanlage mit wenigstens einem Hauptfahrdraht, wenigstens einem Kreuzungsfahrdraht und wenigstens einem Kreuzungsstab angegeben, wobei der Kreuzungsstab mittels Befestigungsmittel mit dem Hauptfahrdraht verbunden ist, wobei sich der Hauptfahrdraht und der Kreuzungsfahrdraht im Bereich des Kreuzungsstabs kreuzen und wobei der Kreuzungsfahrdraht zwischen dem Kreuzungsstab und dem Hauptfahrdraht verläuft, bei der der Kreuzungsfahrdraht gegenüber dem Kreuzungsstab und gegenüber dem Hauptfahrdraht zumindest im Bereich des Kreuzungsstabs keinen elektrisch leitenden Kontakt aufweist.

Die erfindungsgemäße Lösung hat den Vorteil, dass im Kreuzungsbereich der Fahrdrähte in dem der Stromabnehmer des Fahrzeugs, insbesondere Schienenfahrzeugs, beide Fahrdrähte berührt und in beiden entsprechend ein Strom fließt, trotz sich ggf. bildender Schwingungen und zueinander gegenläufiger Bewegungen der Fahrdrähte, eine Stromunterbrechung und damit die Bildung von Abrisslichtbögen verhindert werden kann.

Dadurch wird ein entsprechender Verschleiß der Fahrdrähte wirksam vermieden.

Nach einer besonders bevorzugten Ausführungsform der Erfindung ist zumindest die Oberseite des Hauptfahrdrahts und die Oberseite des Kreuzungsfahrdrahts elektrisch isolierend ausgeführt.

Nach einer weiteren bevorzugten Ausführungsform der Erfindung ist zumindest die Oberseite des Hauptfahrdrahts und die Unterseite des Kreuzungsstabs elektrisch isolierend ausgeführt.

Nach einer ebenfalls bevorzugten Ausführungsform der Erfindung ist zumindest die Oberseite des Hauptfahrdrahts, die Oberseite des Kreuzungsfahrdrahts und die Unterseite des Kreuzungsstabs elektrisch isolierend ausgeführt.

Bei allen drei vorstehend beschriebenen Ausführungsformen der Erfindung wird ein elektrisch leitender Kontakt im Bereich des Kreuzungsstabs insbesondere bei Berührung zwischen dem Kreuzungsfahrdraht und dem Kreuzungsstab bzw. dem Kreuzungsfahrdraht und dem Hauptfahrdraht zuverlässig vermieden, wodurch auch die Entstehung von Lichtbögen zwischen dem Kreuzungsstab und dem Kreuzungsfahrdraht bzw. dem Hauptfahrdraht und dem Kreuzungsfahrdraht unterbunden werden.

Weiterhin sind bevorzugt der Kreuzungsstab und/oder die Befestigungsmittel vollständig elektrisch isolierend ausgeführt. Hiermit kann auf einfache Weise ein elektrisch leitender Kontakt insbesondere bei Berührung zwischen dem Kreuzungsstab und dem Kreuzungsfahrdraht verhindert werden, wodurch die Entstehung von Lichtbögen zwischen dem Kreuzungsstab und dem Kreuzungsfahrdraht unterbunden werden.

Besonders bevorzugt ist die elektrische Isolierung mittels befestigbaren Isolationselementen ausgeführt. Damit ist eine nachträgliche elektrische Isolierung des Kreuzungsstabs und/oder des Kreuzungsfahrdrahts und/oder des Hauptfahrdrahts an allen gewünschten Stellen sehr einfach und problemlos möglich. Die Isolationselemente können dabei individuell in allen möglichen, gewünschten Längen und Formen ausgeführt werden.

Nach einer besonders bevorzugten Ausführungsform der Erfindung weisen der Kreuzungsfahrdraht und/oder der Hauptfahrdraht und/oder der Kreuzungsstab Befestigungsrillen auf, an denen die Isolationselemente befestigbar sind. Die Isolationselemente sind dabei bevorzugt aufsteckbar und/oder aufschiebbar ausgeführt. Durch eine entsprechende Formung der Isolationselemente können diese auf einfachste Weise an den Befestigungsrillen des Kreuzungsfahrdrahts, des Hauptfahrdrahts oder des Kreuzungsstabs befestigt, insbesondere aufgeclipst, aufgesteckt bzw. auch aufgeschoben werden. Die Isolationselemente können somit je nach Bedarf an der Unterseite des Kreuzungsstabs und/oder an der Ober- und/oder Unterseite des Kreuzungsfahrdrahts und/oder an der Ober- und/oder Unterseite des Hauptfahrdrahts angebracht werden. Die Isolationselemente sind somit sehr leicht austausch- und nachrüstbar. Es ist zwar sehr vorteilhaft, dass zur Isolierung einer individuellen Stelle jeweils nur ein Isolierelement in der gewünschten Größe und Form verwendet wird, jedoch ist zur Isolierung einer individuellen Stelle auch die Verwendung mehrerer Isolierelemente denkbar und möglich.
Eine Befestigung der Isolationselemente mittels einer Klebeverbindung ist bei Bedarf ebenfalls denkbar und möglich.

Besonders bevorzugt sind die Isolationselemente vollständig aus isolierendem Material ausgeführt. Dies vereinfacht deren Herstellung außerordentlich. Bei Bedarf können die Isolationselemente aber auch aus unterschiedlichen Materialien hergestellt werden.

Besonders bevorzugt sind die Isolationselemente aus Kunststoff oder Keramik ausgeführt. Durch die Bewegung und Reibung von Kreuzungsstab, Kreuzungsfahrdraht sowie Hauptfahrdraht gegeneinander entstehen erhebliche Reibungs- und Druckkräfte, die auf die Isolationselemente einwirken, so dass eine hohe Abriebbeständigkeit der Isolationselemente notwendig ist, welches mit den genannten Materialien sehr gut erreicht werden kann. Dies wird besonders bevorzugt mit Kunststoffen gewährleistet, die eine Härte von mind. 60 Shore-D und einen Reibwert von kleiner als 0,05 in Verbindung mit kupferlegierten Fahrdrähten aufweisen.

Bevorzugt sind alle Isolationselemente aus dem gleichen Material ausgeführt, sodass ein entsprechender Abrieb des Isolationsmaterials bei einer Bewegung bzw. Reibung von Kreuzungsstab, Kreuzungsfahrdraht sowie Hauptfahrdraht gegeneinander minimiert werden kann. Es ist deshalb ggf. vorteilhaft die Oberseite, bzw. Oberkante des Kreuzungsfahrdrahtes und des Hauptfahrdrahtes sowie gleichzeitig, zumindest lokal beschränkt, zusätzlich die Unterseite bzw. Unterkante des Kreuzungsstabes und des Kreuzungsfahrdrahtes mit Isolationselementen auszuführen, um, aufgrund der erheblichen Reibungsund Druckkräfte, die auf die Isolationselemente einwirken, deren Abrieb weiter zu minimieren und somit die Langzeitbeständigkeit der Isolationselemente weiter zu verbessern, obwohl eine solche zusätzliche elektrische Isolierung der Unterseite des Kreuzungsstabes und des Kreuzungsfahrdrahtes aus Gründen der elektrischen Isolierung selbst funktional nicht notwendig wäre. Dabei wird die Unterseite des Kreuzungsfahrdrahts jeweils nur im nicht befahrenen Bereich des Kreuzungsfahrdrahtes mit einem oder mehreren Isolationselementen ausgeführt.

Zusammengefasst ist bei der erfindungsgemäßen Oberleitungsanlage zur Vermeidung von Lichtbögen insbesondere in Kreuzungsbereichen, z.B. auf Schienenstrecken im Bereich von Weichen, das Einbringen einer gezielten elektrischen Isolierung zwischen einem Kreuzungsstab und zwei stromführenden, sich kreuzenden Fahrdrähten vorgesehen. Für die elektrische Isolierung sind Isolierelemente beispielsweise aus Keramik oder Kunststoff vorgesehen, die auf entsprechend vorhandene Befestigungsrillen u.a. aufgeclipst werden können und somit sehr leicht nachrüstbar bzw. austauschbar sind. Der Verschleiß und somit auch der Instandhaltungsaufwand und damit verbundene Kosten bei bzw. von solchen Fahrdrahtkreuzungen wird hiermit deutlich verringert, wodurch sich deren Lebensdauer wesentlich verlängert.

Im Weiteren werden bevorzugte Ausführungsbeispiele der Erfindung mit Bezugnahme auf die Zeichnungen näher erläutert. Es zeigen:
- Fig. 1: eine schematische Darstellung eines Kreuzungsbereichs einer Oberleitungsanlage in Draufsicht,
- Fig. 2: einen Querschnitt eines Kreuzungsbereichs, bestehend aus Kreuzungsstab 20, Kreuzungsfahrdraht 22 und Hauptfahrdraht 24 und
- Fig. 3 bis 6: Ausführungsbeispiele eines Querschnitts eines Kreuzungsbereichs mit alternativen Isolierungen

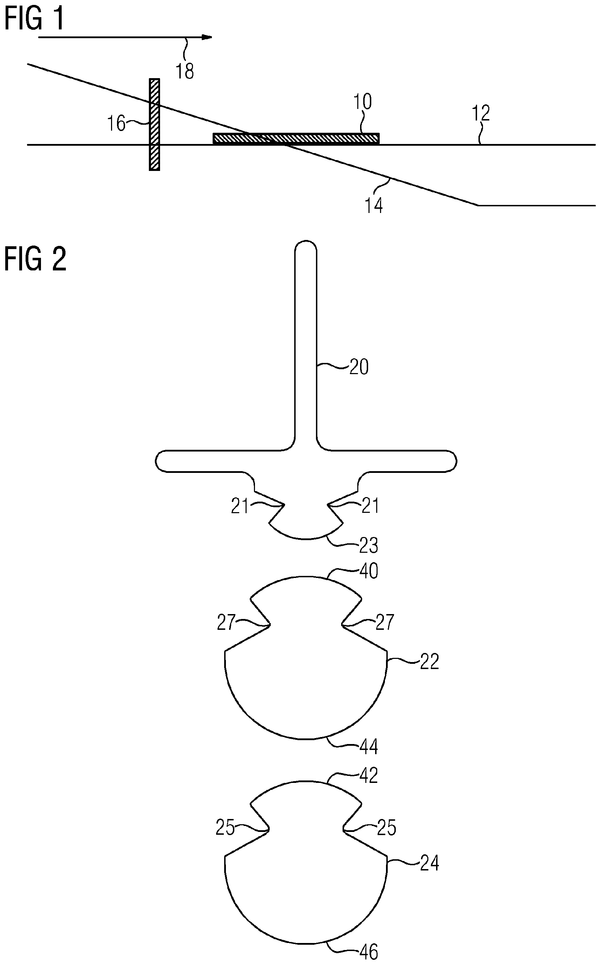

Fig. 1 zeigt eine schematische Darstellung eines Kreuzungsbereichs einer Oberleitungsanlage in Draufsicht.

Der Kreuzungsstab 10 ist hierbei mit dem Hauptfahrdraht 12 mittels Befestigungsklemmen (nicht dargestellt) verbunden. Beide werden vom Kreuzungsfahrdraht 14 gekreuzt. Ein Fahrzeug, insbesondere Schienenfahrzeugs, symbolisiert durch den Stromabnehmer 16, der im Kreuzungsbereich von unten gleichzeitig den jeweils stromdurchflossenen Kreuzungsfahrdraht 14 und den Hauptfahrdraht 12 berührt, bewegt sich von links nach rechts (Fahrtrichtung 18) vor dem Kreuzungsbereich entlang des Hauptfahrdrahts 12 und nach Passieren des Kreuzungsbereichs, z.B. auf Schienenstrecken nach Passieren einer Weiche, weiter entlang des Kreuzungsfahrdrahts 14.

Fig. 2 zeigt einen Querschnitt eines Kreuzungsbereichs, bestehend aus Kreuzungsstab 20, Kreuzungsfahrdraht 22 und Hauptfahrdraht 24

Der Kreuzungsstab 20 ist dabei üblicherweise mit dem Hauptfahrdraht 24 mittels Befestigungsklemmen, die sich an beiden Enden des Kreuzungsstabs 20 befinden (nicht dargestellt), verbunden, wodurch zwischen Kreuzungsstab 20 und Hauptfahrdraht 24 eine Lücke bzw. ein Fenster entsteht, welches seitlich rechts und links durch die beiden Befestigungsklemmen begrenzt wird und in dieser Darstellung ebenfalls nicht zu sehen ist. Der Kreuzungsfahrdraht 22 kreuzt dabei den Kreuzungsstab 20 und den Hauptfahrdraht 24 in diesem Fenster. Der Kreuzungsstab 20 weist gegenüberliegende Befestigungsrillen 21 sowie eine Unterseite 23 auf, wobei die Unterseite 23 der Oberseite 40 des Kreuzungsfahrdrahts 22 gegenüberliegt. Der Kreuzungsfahrdraht 22 weist ebenfalls gegenüberliegende Befestigungsrillen 27 sowie eine Unterseite 44 auf, die wiederum der Oberseite 42 des Hauptfahrdrahts 24 gegenüberliegt. Der Hauptfahrdraht 24 weist ebenfalls gegenüberliegende Befestigungsrillen 25 sowie eine Unterseite 46 auf. Die Befestigungsklammern greifen dabei in die Befestigungsrillen 21 des Kreuzungsstabs 20 sowie in die Befestigungsrillen 25 des Hauptfahrdrahts 24 ein. Kreuzungsfahrdraht 22 und Hauptfahrdraht 24 sind üblicherweise als blanke Leiter ausgeführt. Bei der Durchfahrt von Schienenfahrzeugen im Kreuzungsbereich mit vergleichsweise hohen Befahrgeschwindigkeiten kommt es infolge von entstehenden Schwingungen teilweise zu größeren Bewegungen der zwei Fahrdrähte gegeneinander, so dass sich beide stromführenden Fahrdrähte ggf. berühren.

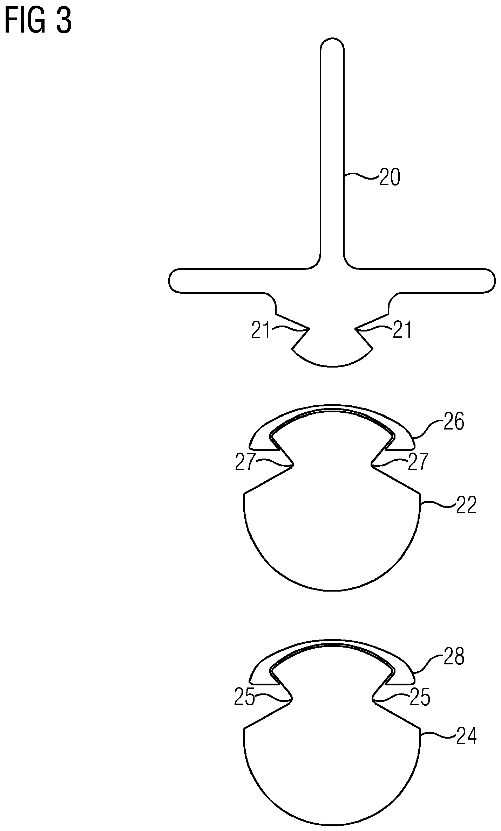

Um dies zu vermeiden, wird erfindungsgemäß eine geeignete elektrische Isolierung vorgeschlagen. In den Figuren 3 bis 7 werden unterschiedliche Ausführungsbeispiele hierzu dargestellt.

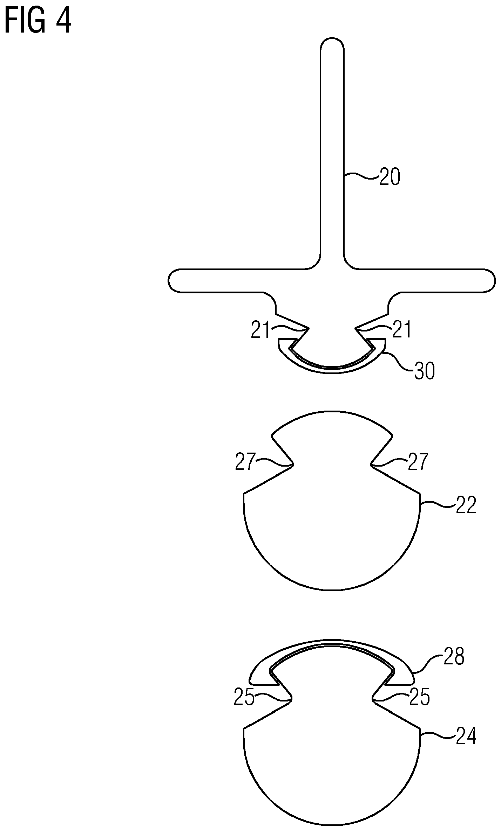

Fig. 3 zeigt erfindungsgemäße Isolierungselemente 26 und 28, die auf der Oberseite 40 des Kreuzungsfahrdrahts 22 und auf der Oberseite 42 des Hauptfahrdrahts 24 befestigt sind und somit einen elektrisch leitenden Kontakt im Bereich des Kreuzungsstabs 20 insbesondere bei Berührung zwischen dem Kreuzungsfahrdraht 22 und dem Kreuzungsstab 20 bzw. dem Kreuzungsfahrdraht 22 und dem Hauptfahrdraht 24 zuverlässig vermeiden. Die Isolierungselemente 26 und 28 sind dabei vorteilhafterweise derart geformt, dass sie auf den Kreuzungsfahrdraht 22 in die entsprechenden Befestigungsrillen 27 bzw. auf den Hauptfahrdraht 24 in die entsprechenden Befestigungsrillen 25 sehr einfach aufgeclipst bzw. aufgesteckt oder auch aufgeschoben werden können.
Die Isolationselemente 26 und 28 sind somit sehr leicht austausch- und nachrüstbar.
Die Isolationselemente 26 und 28 sind vollständig aus isolierendem Material, insbesondere Kunststoff oder Keramik ausgeführt. Durch die Bewegung und Reibung von Kreuzungsstab 20, Kreuzungsfahrdraht 22 sowie Hauptfahrdraht 24 gegeneinander entstehen erhebliche Reibungs- und Druckkräfte, die auf die Isolationselemente 26 und 28 einwirken, so dass eine hohe Abriebbeständigkeit der Isolationselemente 26 und 28 notwendig ist, welches mit den genannten Materialien sehr gut erreicht werden kann. Dies ist insbesondere bei Kunststoffen gewährleistet, die eine Härte von mind. 60 Shore-D und einen Reibwert von kleiner als 0,05 in Verbindung mit kupferlegierten Fahrdrähten aufweisen.
Dasselbe gilt analog auch für die Isolierungselemente 30 und 32, die in den Ausführungsbeispielen in den Fig. 4, 5 und 6 gezeigt werden.

Fig. 4 zeigt erfindungsgemäße Isolierungselemente 30 und 28, die auf der Unterseite 23 des Kreuzungsstabs 20 und auf der Oberseite 42 des Hauptfahrdrahts 24 befestigt sind und somit ebenfalls einen elektrisch leitenden Kontakt im Bereich des Kreuzungsstabs 20 insbesondere bei Berührung zwischen dem Kreuzungsfahrdraht 22 und dem Kreuzungsstab 20 bzw. dem Kreuzungsfahrdraht 22 und dem Hauptfahrdraht 24 zuverlässig vermeiden. Die Isolierungselemente 30 und 28 sind dabei wieder vorteilhafterweise derart geformt, dass sie auf den Kreuzungsstab 20 in die entsprechenden Befestigungsrillen 21 bzw. auf den Hauptfahrdraht 24 in die entsprechenden Befestigungsrillen 25 sehr einfach aufgeclipst bzw. aufgesteckt oder auch aufgeschoben werden können.

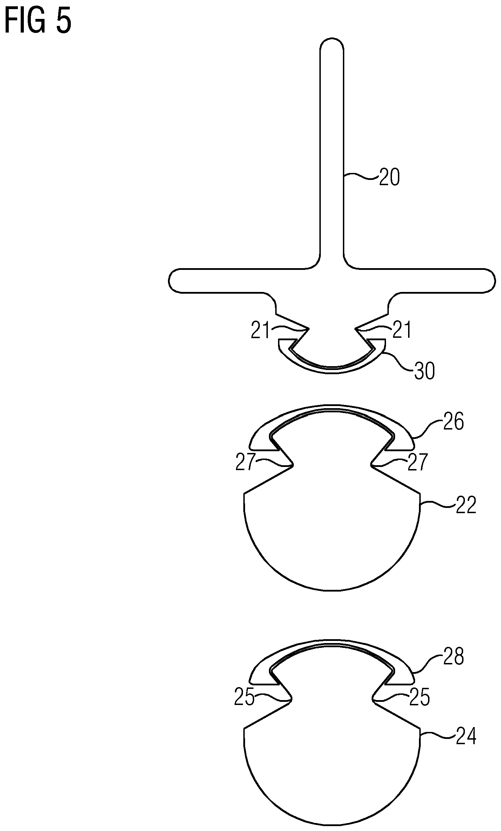

Fig. 5 zeigt erfindungsgemäße Isolierungselemente 26, 28 und 30, die auf der Oberseite 40 des Kreuzungsfahrdrahts 22, auf der Oberseite 42 des Hauptfahrdrahts 24 und auf der Unterseite 23 des Kreuzungsstabs 20 befestigt sind und somit auch in diesem Ausführungsbeispiel einen elektrisch leitenden Kontakt im Bereich des Kreuzungsstabs 20 insbesondere bei Berührung zwischen dem Kreuzungsfahrdraht 22 und dem Kreuzungsstab 20 bzw. dem Kreuzungsfahrdraht 22 und dem Hauptfahrdraht 24 zuverlässig vermeiden. Die Isolierungselemente 26, 28 und 30 sind dabei wieder analog zu der Beschreibung der Figuren 4 und 5 befestigt.

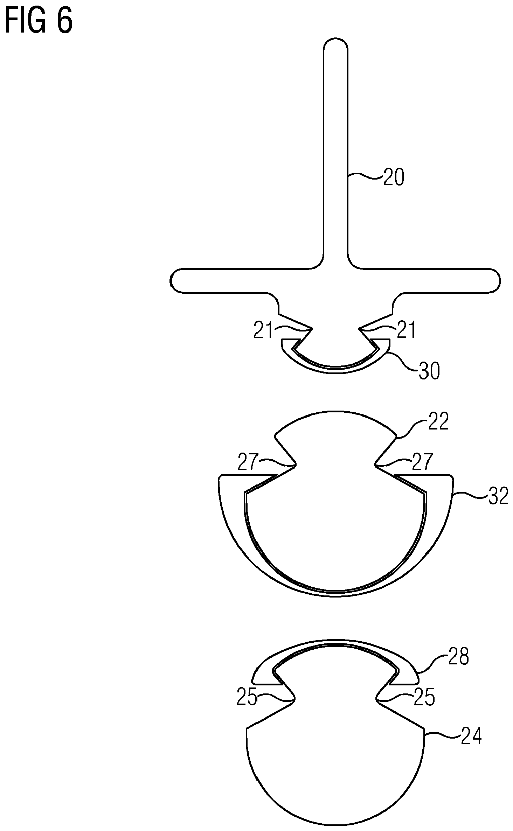

Fig 6 zeigt im Wesentlichen das Ausführungsbeispiel der Fig. 4 ergänzt durch ein zusätzliches Isolationselement 32 das auf der Unterseite 44 des Kreuzungsfahrdrahts 22 in die Befestigungsrillen 27 aufgeclipst bzw. aufgesteckt oder auch aufgeschoben werden kann. Bei einer Bewegung bzw. Reibung von Kreuzungsstab 20, Kreuzungsfahrdraht 22 sowie Hauptfahrdraht 24 gegeneinander wirken erhebliche Reibungs- und Druckkräfte, auf die Isolationselemente 28, 30 und 32 ein. Dabei reibt beispielsweise Isolationselement 32 gegen Isolationselement 28 bzw. Isolationselement 30 gegen die Oberseite 40 des Kreuzungsfahrdrahtes 22. Um einen entsprechenden Abrieb des Isolationsmaterials hierbei zu minimieren sind zunächst alle Isolationselemente 28, 30 und 32 aus dem gleichen Material ausgeführt, so dass bei der Reibung des Isolationselements 32 gegen das Isolationselement 28 der Abrieb entsprechend gering ausfällt. Um dies auch für die Reibung zwischen Isolationselement 30 gegen die Oberseite 40 des Kreuzungsfahrdrahtes 22 zu erreichen, müsste deshalb zusätzlich auch die Oberseite 40 des Kreuzungsfahrdrahtes 22 noch mit einem Isolationselement 26 (hier nicht dargestellt) versehen werden.

Es ist deshalb ggf. vorteilhaft die Oberseiten 40 bzw. 42 des Kreuzungsfahrdrahtes 22 und des Hauptfahrdrahtes 24 sowie gleichzeitig, zumindest lokal beschränkt, zusätzlich die Unterseiten 23 bzw. 44 des Kreuzungsstabes 20 und des Kreuzungsfahrdrahtes 22 mit entsprechenden Isolationselementen 26, 28, 30, 32 auszuführen, um, aufgrund der erheblichen Reibungs- und Druckkräfte, die auf die Isolationselemente einwirken, deren Abrieb weiter zu minimieren und somit die Langzeitbeständigkeit der Isolationselemente weiter zu verbessern, obwohl eine solche zusätzliche elektrische Isolierung der Unterseiten 23 bzw. 44 des Kreuzungsstabes 20 und des Kreuzungsfahrdrahtes 22 aus Gründen der elektrischen Isolierung selbst funktional nicht notwendig wäre. Die Unterseite 44 des Kreuzungsfahrdrahts 22 ist dabei jeweils nur im nicht befahrenen Bereich des Kreuzungsfahrdrahtes 22 mit einem Isolationselement 32 ausgeführt.

## Patentansprüche

1. Oberleitungsanlage mit wenigstens einem Hauptfahrdraht (12), wenigstens einem Kreuzungsfahrdraht (14) und wenigstens einem Kreuzungsstab (10), wobei der Kreuzungsstab (10) mittels Befestigungsmittel mit dem Hauptfahrdraht (12) verbunden ist, wobei sich der Hauptfahrdraht (12) und der Kreuzungsfahrdraht (14) im Bereich des Kreuzungsstabs (10) kreuzen und wobei der Kreuzungsfahrdraht (14) zwischen dem Kreuzungsstab (10) und dem Hauptfahrdraht (12) verläuft,
**dadurch gekennzeichnet, dass**
der Kreuzungsfahrdraht (14) gegenüber dem Kreuzungsstab (10) und gegenüber dem Hauptfahrdraht (12) zumindest im Bereich des Kreuzungsstabs (10) keinen elektrisch leitenden Kontakt aufweist.

2. Oberleitungsanlage nach Anspruch 1,
**dadurch gekennzeichnet, dass**
zumindest die Oberseite (44) des Hauptfahrdrahts (24) und die Oberseite (40) des Kreuzungsfahrdrahts (22) elektrisch isolierend ausgeführt sind.

3. Oberleitungsanlage nach Anspruch 1,
**dadurch gekennzeichnet, dass**
zumindest die Oberseite (44) des Hauptfahrdrahts (24) und die Unterseite (23) des Kreuzungsstabs (20) elektrisch isolierend ausgeführt sind.

4. Oberleitungsanlage nach Anspruch 1,
**dadurch gekennzeichnet, dass**
zumindest die Oberseite (44) des Hauptfahrdrahts (24), die Oberseite (40) des Kreuzungsfahrdrahts (22) und die Unterseite (23) des Kreuzungsstabs (20) elektrisch isolierend ausgeführt sind.

5. Oberleitungsanlage nach einem der vorherigen Ansprüche,
**dadurch gekennzeichnet, dass**
der Kreuzungsstab (10) und/oder die Befestigungsmittel vollständig elektrisch isolierend ausgeführt sind.

6. Oberleitungsanlage nach einem der vorherigen Ansprüche,
**dadurch gekennzeichnet, dass**
die elektrische Isolierung mittels befestigbarer Isolationselemente (26, 28, 30) ausgeführt wird.

7. Oberleitungsanlage nach einem der vorherigen Ansprüche,
**dadurch gekennzeichnet, dass**
der Kreuzungsfahrdraht (14) und/oder der Hauptfahrdraht (12) und/oder der Kreuzungsstab (10) Befestigungsrillen (21, 25, 27) aufweisen, an denen die Isolationselemente (26, 28, 30) befestigbar sind.

8. Oberleitungsanlage nach einem der Ansprüche 6 oder 7,
**dadurch gekennzeichnet, dass**
die Isolationselemente (26, 28, 30) aufsteckbar und/oder aufschiebbar ausgeführt sind.

9. Oberleitungsanlage nach einem der Ansprüche 6 oder 7,
**dadurch gekennzeichnet, dass**
die Isolationselemente (26, 28, 30) mittels einer Klebeverbindung befestigbar sind.

10. Oberleitungsanlage nach einem der Ansprüche 6 bis 9,
**dadurch gekennzeichnet, dass**
die Isolationselemente (26, 28, 30) vollständig aus isolierendem Material ausgeführt sind.

11. Oberleitungsanlage nach Anspruch 10,
**dadurch gekennzeichnet, dass**
die Isolationselemente (26, 28, 30) aus Kunststoff oder Keramik ausgeführt sind.

12. Oberleitungsanlage nach Anspruch 11,
**dadurch gekennzeichnet, dass**
der Kunststoff eine Härte von mind. 60 Shore-D und einen Reibwert von kleiner als 0,05 aufweist.

13. Oberleitungsanlage nach einem der Ansprüche 6 bis 12,
**dadurch gekennzeichnet, dass**
die Isolationselemente (26, 28, 30) aus dem gleichen Material ausgeführt sind.
